(19) Europäisches Patentamt / European Patent Office / Office européen des brevets

(11) **EP 2 728 150 B1**

(12) **EUROPEAN PATENT SPECIFICATION**

(45) Date of publication and mention
of the grant of the patent:
**07.06.2023 Bulletin 2023/23**

(21) Application number: **12191361.0**

(22) Date of filing: **06.11.2012**

(51) International Patent Classification (IPC):
***F02D 41/00*** *(2006.01)*

(52) Cooperative Patent Classification (CPC):
**F02D 41/0077; F02D 41/0072;** Y02T 10/40

(54) **System for controlling an EGR valve of an internal combustion engine based on a flow model**

System zur Steuerung eines EGR-Ventils eines Verbrennungsmotors basierend auf einem Durchflussmodell

Système de commande d'une soupape EGR d'un moteur à combustion interne basé sur un modèle d'écoulement

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.05.2014 Bulletin 2014/19**

(73) Proprietor: **FPT Industrial S.p.A.**
**10156 Torino (IT)**

(72) Inventor: **Odello, Fabio**
**10093 Collegno (IT)**

(74) Representative: **Franzolin, Luigi et al**
**Studio Torta S.p.A.**
**Via Viotti, 9**
**10121 Torino (IT)**

(56) References cited:
**US-A1- 2004 084 015    US-A1- 2012 138 027**
**US-A1- 2012 138 028**

**EP 2 728 150 B1**

**Description**

**Application field of the invention**

The present invention refers to the field of the systems for controlling the EGR valve, of the sensorless type, namely wherein neither a mass flow sensor nor another equivalent sensor are present for measuring directly the air mass/flow rate entering the internal combustion engine.

Description of the prior art

The emission regulations for internal combustion engines require stricter and stricter emission limits and more and more demanding homologation cycles. One of the pollutants which has the highest impact and which the regulations require to keep under control is Nitrogen Oxide (NOx): the EGR (Exhaust Gas Recirculation) is the system in charge of, in most applications, the reduction of such pollutant.

The traditional EGR control systems are based on the information provided by the intake air flow sensor, also known as "mass flow sensor", but the calibration of such sensor is highly influenced by the configuration of intake system. Being the latter, in some cases, very variable, the management of the sensor itself can be problematic. Furthermore the mass flow sensor, especially in so-called "off-road" applications, namely for earthworks machines and for construction vehicles, is affected by the dirt coming from the surrounding environment, which results in a bad control of the engine, both in terms of intake and in terms of EGR.

A control system that is able to manage the EGR system without the help of the mass flow sensor allows to be independent of the previously mentioned factors, making its functioning and its respective calibration more robust.

A known strategy to avoid using a mass flow sensor provides the mapping of the opening value of the EGR valve in relation to engine speed and to load. Such solution is not satisfactory, since it does not allow a robust control of the drifts of any of the components, both due to production uniformity and to the ageing of the components themselves. Other solutions provide alternative sensors, such as Uhego sensor, Soot sensor, NOx sensor, Pitot tube,etc..

Such sensors are generally expensive and the algorithms exploiting such sensors are not reliable and are affected by several negative aspects, such as the lack of continuous availability of the signals from most of these sensors: Uhego sensor, just to mention the first one, needs some warming time from the engine starting before being able to provide a reliable signal. Consequently the control of the EGR with cold engine has a very low precision.

The strategies described herein are known in the art, and their different alternative embodiments have been described in the attempt to overcome their limits. Known control methods are disclosed, for example, in US2004084015A1 and US2012138027A1, which disclose the preamble of claim 1. The method of US2004084015A1 includes measuring an intake manifold pressure value, measuring a flow value indicative of flow through the ETC throttle valve, determining a desired intake manifold pressure value, determining a desired ETC throttle valve position, determining a desired flow through the ETC throttle valve, and adjusting the ETC throttle valve position. The method of US2012138027A1 includes calculating a target mass flux of EGR gas flowing an EGR line, calculating an effective flowing area of an EGR valve disposed on the EGR line, calculating an EGR flow sensitivity by dividing the target mass flux with the effective flowing area, and controlling a real opening rate of the EGR valve by applying the EGR flow sensitivity to a target opening rate of the EGR valve.

Summary of the invention

The aim of the present invention is to overcome all the drawbacks of the prior art, by providing a control system of the EGR valve of an internal combustion engine.

The object of the present invention is a method for controlling the EGR valve of an internal combustion engine based on a flow model, as claimed in claim 1.

In particular, according to the present invention, the EGR valve is modelled as a nozzle from which the recirculated gas flow, in order to calculate an outflow area value and to correct the recirculated gas flow rate according to a flow model. In particular, the recirculated gas flow rate is multiplied by the equivalent outflow area.

For example, the equivalent outflow area may be calculated by a mapping, parameterized with respect to the revolutions per minute of the engine.

The control scheme is made in closed loop, using the feedback from an EGR flow rate error recirculated on the same valve model.

For example, the feedback line may be filtered by a regulator, parameterized with respect to the revolutions per minute of the engine.

Furthermore, said regulator may be a function of the quantity of injected fuel.

It is a further object of the present invention a control device of the EGR valve, implementing the aforementioned method, as claimed in claim 7.

A further object of the present invention is an internal combustion engine and a ground vehicle comprising said control device of the EGR valve, as claimed in claims 10 and 11.

The claims set out particular embodiments of the invention.

Brief description of the Figures

Further purposes and advantages of the present invention will become clear from the following detailed description and the drawings that are attached hereto, which are merely illustrative and non-limitative, in which:

figure 1 shows the control scheme in outline representing the method that is object of the present invention;
figure 2 shows an exploded view of the block scheme shown in figure 1;
figure 3 shows an internal combustion engine comprising means to realize the method schematized in figure 1.

In the figures the same reference numbers and letters identify the same elements or components.

Detailed description of preferred embodiments of the

invention

The method that is object of the invention is described hereinafter, such method allows to perform a continuous control of the opening of the EGR.

The method is described with reference to the functional block diagrams of the attached figures, wherein each block corresponds to the logic functions performed by the apparatus implementing them.

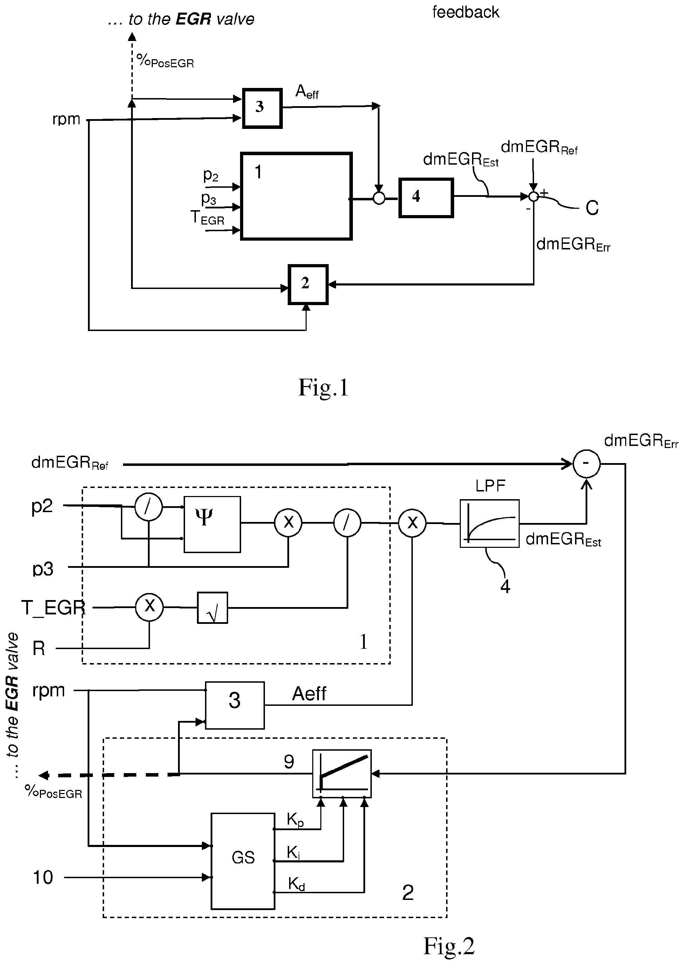

In line with the language used in the field of the automatic controls, each block can be considered as a filter applied to the respective input variables, regardless of the type of logical operation carried out. With particular reference to figure 1, the block 1 implements a flow model, that can be of the type per se known, wherein

- P2: the pressure downstream of the EGR valve, namely at the intake manifold;
- P3: the pressure upstream of the EGR valve, namely at the exhaust manifold;
- T_EGR: the temperature upstream of the EGR valve, namely the temperature at the exhaust manifold.

Block 3 models the EGR valve as a nozzle, in order to calculate Aeff, namely the equivalent outflow area of the valve.

The output of the block 3 is multiplied by the output of the block 1 defining an estimated quantity/flow rate of EGR, namely the parameter dmEGR_Est.

The flow rate dmEGR_Est of the recirculated gas EGR estimated by the present flow model is used to control the opening/closing of the EGR valve.

When the control scheme receives the feedback, such flow rate dmEGR_Est is compared, by means of a comparator C, with a reference value dmEGR_Ref. The difference between such two values, namely the error dmEGR_Err, is given as a feedback to block 3 which estimates the equivalent outflow area Aeff. Preferably such error value is filtered, on the feedback line, by a regulator 2. Thus the regulation of the opening of the EGR valve, namely the regulation of the outflow area Aeff is controlled by means of a regulator, thus the output of the regulator 2 is also given as a feedback to the block 3 of the flow model.

According to the present invention, the outflow area Aeff is tabulated/mapped. Preferably, the feedback line ends at such table defined by block 3 in order to identify the outflow area value Aeff. Such mapping, preferably, is parameterized on the revolutions per minute of the engine. Starting from a real valve, laboratory tests have been performed to obtain a table indicating the current Aeff value in relation to the valve opening. Then, when the model has been implemented, it has been realized that the Aeff value is influenced by the engine operating point and in particular by the engine rpm, above all in transient conditions of the whole engine+valve system. In particular, the estimation of the outflow area is wrong with high engine revolutions per minute.

Thus, the introduction of test bench sensors allowed to correct such estimation error, parameterizing the table also on the revolutions per minute of the engine. The same experiment has been repeated on increasingly aged engines, verifying that such inaccuracies are always present. Thus, the introduction of such mapping results is a constant advantage.

Thanks to the presence of a dynamic flow model associated to a high parameterizable closed-loop control, it is possible to modulate the behaviour of the EGR valve in transient conditions according to the needs of each case, in order to obtain the best possible trade-off.

The advantageous properties of the closed-loop, as described in the present invention allow:

- to control the dynamics of the transient conditions,
- to reject possible disturbances/irregular behaviour of the model inlets (P2, P3, T2, T3),
- to use a closed-loop regulator as a filter, which filters unwanted high frequency dynamics. The latter may or may not have a direct connection with the ageing or with constructive problems of the components, in fact, even a new engine may have, in certain conditions, inlet dynamics that may create trouble to an EGR control without closed loop.

Furthermore, the proposed method is based on relatively standard sensors, and allow to avoid the costs connected to the management of more critical sensors in terms of layout, characterization and mounting, such as the mass flow sensor, the Pitot tube, and other particular sensors.

The estimated EGR flow rate dmEGR_Est, as described above, is modelled by means of a flow model, wherein the EGR valve is modelled as a nozzle: the real flow is then assimilated to an equivalent ideal flow, that is stationary, adiabatic and reversible, according to the equation

$$\dot{m}_{EGR,est} = \frac{A_{eff} \cdot p_3 \sqrt{\frac{2\gamma}{\gamma-1}\left(\Pi_{th}^{2/\gamma} - \Pi_{th}^{\gamma+1/\gamma}\right)}}{\sqrt{RT_{EGR}}} \quad (1),$$

$$\Pi_{th} = \max\left(\frac{p_2}{p_3}, \left(\frac{2}{\gamma+1}\right)^{\frac{\gamma}{\gamma-1}}\right) \quad (2)$$

It is to be noted that the notation $\dot{m}_{EGR_{est}}$ coincides with dmEGR_Est in the figures.

For more convenience, $\Psi$ indicates the quantity $\sqrt{\frac{2\gamma}{\gamma-1}\left(\Pi_{th}^{2/\gamma} - \Pi_{th}^{\gamma+1/\gamma}\right)}$ , so that the equation (1) can be simplified as

$$\dot{m}_{EGR,est} = \frac{A_{eff} \cdot p_3 \Psi}{\sqrt{RT_{EGR}}} \quad (3)$$

The regulator 2 is preferably of the PID type (proportional/integrative/derivative) .

According to another aspect of the present invention, the PID is not static, namely it is not based on fixed gains, but on variable gains that can be varied in relation to at least one of the following parameters/operating condition:

- engine operating point and, preferably, revolutions per minute;
- amplitude of the received error dmEGR_Err;
- sign of the received error dmEGR_Err (positive/negative), in order to differentiate the behaviour of the EGR valve during its opening and its closing;
- operating condition "normal EGR" or "reduced EGR": the latter management mode of the EGR has the purpose to protect the engine from a too high grade of smoke, and is enabled according to information such as vehicle speed, engaged gear, vehicle consumption, time passed from the engine starting.

Thus the output of the regulator 2 defines, virtually, a "pre-control" of the opening of the EGR valve, which is immediately modulated by means of the conversion map parameterized on the engine revolutions per minute, represented by block 3.

Preferably, the output of block 1, namely of the block implementing the flow model is filtered by block 4, which implements a low-pass filter.

Figure 2 shows an exploded view of the block scheme of figure 1.

In particular, the block 3 defining a regulator PID which receives in input the position error of the EGR valve and by means of which the opening 9 of the EGR valve is calculated, preferably expressed in percentage %posEGR. At least one of the parameters Kp, Ki and Kd of the controller (proportional, integrative and derivative) are a function of at least the engine revolutions per minute (rpm) and preferably also of the quantity of injected diesel fuel 10. Thus, being the information relating to the quantity of injected fuel and to the current revolutions per minute present in the regulator, it is possible to differentiate the behaviour of the regulator in relation to the transient conditions, namely the sudden accelerations.

As regards the block 1 shown in figure 2, it consists of simple mathematical operations to implement the formula (3), with the only exception of the quantity Aeff which is calculated by means of the table of block 3.

It is worth noting that, according to a preferred alternative embodiment of the invention, also the quantity Ψ is calculated by means of a multi-parameter table, in order to reduce, in this case, the computational burden.

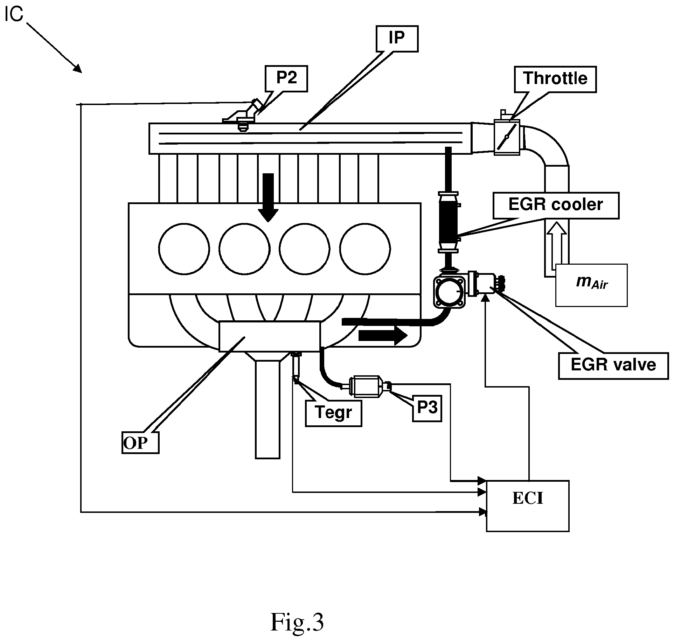

With reference to figure 3, an internal combustion engine IC is shown having an intake manifold IP, an exhaust manifold OP and the sensors p2, p3 and T_Egr arranged as described above.

The control unit ECI, on the basis of the values measured by such sensors, regulates the opening/closing of the EGR valve.

Advantageously, the method described herein may be easily implemented in an engine control unit ECI, which is also part of the present invention. Thus, the present invention may advantageously be realized by means of a computer program, which comprises program code means performing the steps of said method, when said program is run on the engine control unit.

For this reason the scope of the present patent is meant to cover also said computer program and the computer-readable means that comprise a recorded message, such computer-readable means comprising the program code means for performing one or more steps of such method, when such program is run on the engine control unit.

It will be apparent to the person skilled in the art that modifications of the disclosed embodiments of the invention can be conceived without departing from the scope of the invention, which is defined by the appended claims.

The elements and the characteristics described in the different preferred embodiments may be combined without departing from the scope of the invention.

**Claims**

1. Method for controlling an EGR valve of an internal combustion engine based on a flow model (1), the flow model (1) estimating an EGR flow rate $\dot{m}_{EGR,est}$ (dmEGR_Est) outgoing from the EGR valve to control an opening/closing of said EGR valve, on the basis of operating parameters (p2, p3, T_EGR) of the internal combustion engine; the method being **characterized in that** it models said EGR valve as a nozzle, thereby an EGR flow rate is assimilated to an equivalent ideal flow, stationary, adiabatic and reversible, according to the equation

$$\dot{m}_{EGR,est} = \frac{A_{eff} \cdot p_3 \sqrt{\dfrac{2\gamma}{\gamma-1}\left(\Pi_{th}^{2/\gamma} - \Pi_{th}^{\gamma+1/\gamma}\right)}}{\sqrt{RT_{EGR}}} \quad (1),$$

Wherein

-

$$\Pi_{th} = \max\left(\frac{p_2}{p_3}, \left(\frac{2}{\gamma+1}\right)^{\frac{\gamma}{\gamma-1}}\right) \quad (2)$$

- p2 is a pressure measured downstream of the EGR valve, namely at the intake manifold;
- p3 is a pressure measured upstream of the EGR valve, namely at the exhaust manifold;
- T_EGR is a temperature measured upstream of the EGR valve, namely the temperature at the exhaust manifold;

and it calculates a relative equivalent outflow area Aeff to correct said estimation of the EGR flow rate $\dot{m}_{EGR,est}$ outgoing from the EGR valve and **in that** said control method further comprises the calculation of a flow rate error (dmEGR_Err), calculated by means of said estimated flow rate $\dot{m}_{EGR,est}$ with respect to a reference value (dmEGR_Ref) and a feedback step of said flow rate error in the calculation of said equivalent outflow area Aeff and to control said opening/closing of said EGR valve.

2. Method according to claim 1, wherein said feedback comprises a filtering by means of a regulator (2).

3. Method according to claim 2, wherein said regulator (2) is of the PID type.

4. Method according to one of the claims 2 or 3, wherein the gains of the regulator are fixed.

5. Method according to one of the claims 2 or 3, wherein the gains of the regulator are variable

- as a function of an operating point (rpm) of the internal combustion engine and/or
- as a function of an amplitude of said estimation error (dmEGR_Eff) and/or
- as a function of a sign (+/-) of said estimation error (dmEGR_Eff) and/or
- as a function of control policies of the exhaust gas recirculation.

6. Method according to any of the previous claims, wherein the calculation of the equivalent area (Aeff) is a function of the operating point of the internal combustion engine (IC) .

7. Control device (ECI) for controlling the EGR valve of an internal combustion engine based on a flow model (1) comprising

- (p2) a pressure sensor downstream of the EGR valve, namely at the intake manifold;
- (p3) a pressure sensor upstream of the EGR valve, namely at the exhaust manifold;
- (T_EGR) a temperature sensor upstream of the EGR valve, namely at the exhaust manifold;
- calculation means to perform all the steps of any one of the previous claims from 1 to 6.

8. Computer program comprising instructions which, when the program is executed by the control device of claim 7, causes it to carry out the steps of any claim from 1 to 6.

9. Computer-readable means comprising a recorded program, said program comprising instructions which, when the program is executed by the control device of claim 7, causes it to carry out the steps of any claim from 1 to 6.

10. Internal combustion engine comprising a control device (ECI) according to claim 7.

11. Ground vehicle comprising an internal combustion engine according to claim 10.

**Patentansprüche**

1. Verfahren zum Steuern eines AGR-Ventils einer Brennkraftmaschine basierend auf einem Strömungsmodell (1), wobei das Strömungsmodell eine von dem AGR-Ventil abgehende AGR-Durchflussmenge $\dot{m}_{EGR,est}$ (dmEGR_Est) auf der Grundlage der Betriebsparameter (p2, p3, T_EGR) der Brennkraftmaschine schätzt, um ein Öffnen/Schließen des AGR-Ventils zu steuern; wobei das Verfahren **dadurch gekennzeichnet ist, dass** es das AGR-Ventil als eine Düse modelliert, wodurch eine AGR-Durchflussmenge in eine äquivalente ideale Strömung, die stationär, adiabatisch und reversibel ist, gemäß der Gleichung

$$\dot{m}_{EGR,est} = \frac{A_{eff} \cdot p_3 \sqrt{\frac{2\gamma}{\gamma - 1}\left(\Pi_{th}^{2/\gamma} - \Pi_{th}^{\gamma+1/\gamma}\right)}}{\sqrt{RT_{EGR}}} \quad (1),$$

aufgenommen wird, wobei

-

$$\Pi_{th} = \max\left(\frac{p_2}{p_3}, \left(\frac{2}{\gamma+1}\right)^{\frac{\gamma}{\gamma-1}}\right) (2),$$

- $p_2$ ein stromabwärts des AGR-Ventils, nämlich am Einlasskrümmer, gemessener Druck ist;
- $p_3$ ein stromaufwärts des AGR-Ventils, nämlich am Auslasskrümmer, gemessener Druck ist;
- T_EGR eine stromaufwärts des AGR-Ventils gemessene Temperatur, nämlich die Temperatur am Auslasskrümmer ist;

und es eine relative äquivalente Ausströmfläche Aeff berechnet, um die Schätzung der von dem AGR-Ventil abgehenden AGR-Durchflussmenge $\dot{m}_{EGR,est}$ zu korrigieren, und dass das Steuerverfahren ferner die Berechnung eines Durchflussmengenfehlers (dmEGR_Err), der mittels der geschätzten Durchflussmenge $\dot{m}_{EGR,est}$ bezüglich eines Referenzwerts (dmEGR_Ref) berechnet wird, und einen Rückkopplungsschritt des Durchflussmengenfehlers bei der Berechnung der äquivalenten Ausströmfläche Aeff umfasst, um das Öffnen/Schließen des AGR-Ventils zu steuern.

2. Verfahren nach Anspruch 1, wobei das Rückkoppeln eine Filterung mittels eines Reglers (2) umfasst.

3. Verfahren nach Anspruch 2, wobei der Regler der PID-Typ ist.

4. Verfahren nach einem der Ansprüche 2 oder 3, wobei die Verstärkungen des Reglers fest sind.

5. Verfahren nach einem der Ansprüche 2 oder 3, wobei die Verstärkungen des Reglers variabel sind,

- als eine Funktion eines Arbeitspunkts (min⁻¹) der Brennkraftmaschine und/oder
- als eine Funktion einer Amplitude des Schätzfehlers (dmEGR_Eff) und/oder
- als eine Funktion des Vorzeichens (+/-) des Schätzfehlers (dmEGR_Eff) und/oder
- als eine Funktion der Steuerstrategien der Abgasrückführung.

6. Verfahren nach einem der vorhergehenden Ansprüche, wobei die Berechnung der äquivalenten Fläche (Aeff) eine Funktion des Arbeitspunkts der Brennkraftmaschine (IC) ist.

7. Steuervorrichtung (ECI) zum Steuern des AGR-Ventils einer Brennkraftmaschine basierend auf einem Strömungsmodell (1), wobei die Steuervorrichtung umfasst:

- (p2) einen Drucksensor stromabwärts des AGR-Ventils, nämlich am Einlasskrümmer;
- (p3) einen Drucksensor stromaufwärts des AGR-Ventils, nämlich am Auslasskrümmer;
- (T_EGR) einen Temperatursensor stromaufwärts des AGR-Ventils, nämlich am Auslasskrümmer;
- Berechnungsmittel, um alle der Schritte eines der vorhergehenden Ansprüche von 1 bis 6 auszuführen.

8. Computerprogramm, das Anweisungen umfasst, die, wenn das Programm durch die Steuervorrichtung nach Anspruch 7 ausgeführt wird, sie veranlassen, die Schritte eines Anspruchs von 1 bis 6 auszuführen.

9. Computerlesbare Mittel, die ein aufgezeichnetes Programm umfassen, wobei das Programm Anweisungen umfasst, die, wenn das Programm durch die Steuervorrichtung nach Anspruch 7 ausgeführt wird, sie veranlassen, die Schritte eines Anspruchs von 1 bis 6 auszuführen.

10. Brennkraftmaschine, die eine Steuervorrichtung (ECI) nach Anspruch 7 umfasst.

11. Bodenfahrzeug, das eine Brennkraftmaschine nach Anspruch 10 umfasst.

**Revendications**

1. Procédé pour la commande d'une vanne de recyclage des gaz d'échappement, EGR, d'un moteur à combustion interne sur la base d'un modèle d'écoulement (1), le modèle d'écoulement (1) estimant un débit d'écoulement d'EGR $\dot{m}_{EGR,est}$ (dmEGR_Est) sortant de la vanne EGR pour commander une ouverture/fermeture de ladite vanne EGR, sur la base de paramètres de fonctionnement (p2, p3, T_EGR) du moteur à combustion interne ; le procédé étant **caractérisé en ce qu'**il modélise ladite vanne EGR comme une buse, ce par quoi un débit d'écoulement d'EGR est assimilé à un écoulement idéal équivalent, stationnaire, adiabatique et réversible, selon l'équation

$$\dot{m}_{EGR,est} = \frac{A_{eff} \cdot p_3 \sqrt{\frac{2\gamma}{\gamma-1}\left(\Pi_{th}^{2/\gamma} - \Pi_{th}^{\gamma+1/\gamma}\right)}}{\sqrt{RT_{EGR}}}$$

(1),

dans laquelle

$$\Pi_{th} = \max\left(\frac{p_2}{p_3}, \left(\frac{2}{\gamma+1}\right)^{\frac{\gamma}{\gamma-1}}\right)$$

(2),

- p2 est une pression mesurée en aval de la vanne EGR, à savoir au niveau du collecteur d'admission ;
- p3 est une pression mesurée en amont de la vanne EGR, à savoir au niveau du collecteur d'échappement ;
- T_EGR est une température mesurée en amont de la vanne EGR, à savoir la température au niveau du collecteur d'échappement ;

et qu'il calcule une aire d'écoulement de sortie équivalente Aeff relative pour corriger ladite estimation du débit d'écoulement d'EGR $\dot{m}_{EGR,est}$ sortant de la vanne EGR et **en ce que** ledit procédé de commande comprend en outre le calcul d'une erreur de débit d'écoulement (dmEGR_Err), calculée au moyen dudit débit d'écoulement estimé $\dot{m}_{EGR,est}$ par rapport à une valeur de référence (dmEGR_Ref) et une étape de retour d'informations de ladite erreur de débit d'écoulement lors du calcul de ladite aire d'écoulement de sortie équivalente Aeff et pour commander ladite ouverture/fermeture de ladite vanne EGR.

2. Procédé selon la revendication 1, dans lequel ledit retour d'informations comprend un filtrage au moyen d'un régulateur (2).

3. Procédé selon la revendication 2, dans lequel ledit régulateur (2) est du type à proportionnelle intégrale dérivée, PID.

4. Procédé selon l'une des revendications 2 ou 3, dans lequel les gains du régulateur sont fixes.

5. Procédé selon l'une des revendications 2 ou 3, dans lequel les gains du régulateur sont variables

- en fonction d'un point de fonctionnement (tr/min) du moteur à combustion interne et/ou
- en fonction d'une amplitude de ladite erreur d'estimation (dmEGR_Eff) et/ou
- en fonction d'un signe (+/-) de ladite erreur d'estimation (dmEGR_Eff) et/ou
- en fonction de politiques de commande du recyclage des gaz d'échappement.

6. Procédé selon l'une quelconque des revendications précédentes, dans lequel le calcul de l'aire équivalente (Aeff) est une fonction du point de fonctionnement du moteur à combustion interne (IC).

7. Dispositif de commande (ECI) pour la commande de la vanne EGR d'un moteur à combustion interne sur la base d'un modèle d'écoulement (1) comprenant

- (p2) un capteur de pression en aval de la vanne EGR, à savoir au niveau du collecteur d'admission ;
- (p3) un capteur de pression en amont de la vanne EGR, à savoir au niveau du collecteur d'échappement ;
- (T_EGR) un capteur de température en amont de la vanne EGR, à savoir au niveau du collecteur d'échappement ;
- un moyen de calcul pour réaliser toutes les étapes de l'une quelconque des revendications 1 à 6 précédentes.

**8.** Programme d'ordinateur comprenant des instructions qui, lorsque le programme est exécuté par le dispositif de commande de la revendication 7, l'amènent à effectuer les étapes d'une quelconque revendication de 1 à 6.

**9.** Moyen lisible par ordinateur comprenant un programme enregistré, ledit programme comprenant des instructions qui, lorsque le programme est exécuté par le dispositif de commande de la revendication 7, l'amènent à effectuer les étapes d'une quelconque revendication de 1 à 6.

**10.** Moteur à combustion interne comprenant un dispositif de commande (ECI) selon la revendication 7.

**11.** Véhicule terrestre comprenant un moteur à combustion interne selon la revendication 10.

... *to the* ***EGR*** *valve*          feedback

%PosEGR

rpm

**3**   Aeff

p2
p3
T_EGR

**1**

dmEGR_Est   dmEGR_Ref

**4**

+
−   C

dmEGR_Err

**2**

## Fig.1

dmEGR_Err

dmEGR_Ref

−

p2

/

Ψ

X

/

X

LPF

**4**   dmEGR_Est

p3

T_EGR

X

√

R

**1**

rpm

**3**   Aeff

%PosEGR

... *to the* ***EGR*** *valve*

**9**

GS

Kp
Ki
Kd

10

**2**

## Fig.2

Fig.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004084015 A1

- US 2012138027 A1